## Europäisches Patentamt
## European Patent Office
## Office européen des brevets

(19)

(11) Numéro de publication: **0 206 862**
**B1**

(12)

# FASCICULE DE BREVET EUROPEEN

(45) Date de publication du fascicule du brevet:
**17.05.89**

(51) Int. Cl.⁴: **G01D 15/00**, G07C 5/04,
G01P 1/12

(21) Numéro de dépôt: **86401080.6**

(22) Date de dépôt: **22.05.86**

(54) **Dispositif de contrôle de position pour organe scripteur d'enregistreur.**

(30) Priorité: **24.05.85  FR 8507879**

(43) Date de publication de la demande:
**30.12.86 Bulletin 86/52**

(45) Mention de la délivrance du brevet:
**17.05.89 Bulletin 89/20**

(84) Etats contractants désignés:
**DE FR GB IT**

(56) Documents cités:
**DE-A- 2 435 189**
**FR-A- 2 238 197**
**FR-A- 2 249 393**
**FR-A- 2 305 808**
**FR-A- 2 307 253**

(73) Titulaire: **JAEGER, 2, rue Baudin,**
**F-92303 Levallois-Perret(FR)**

(72) Inventeur: **Boucher, Alain, 182, rue de Charenton,**
**F-75012 Paris(FR)**
Inventeur: **Guillou, Jean Pierre, 165, rue Saint-Denis,**
**F-92700 Colombes(FR)**

(74) Mandataire: **Martin, Jean-Jacques et al, Cabinet**
**REGIMBEAU 26, Avenue Kléber, F-75116 Paris(FR)**

ACTORUM AG

## Description

L'invention concerne un dispositif de contrôle de position pour organe scripteur d'enregistreur, plus particulièrement destiné à équiper un enregistreur de route, dénommé en général tachygraphe, à support d'enregistrement du type disque porte-diagramme.

Le disque porte-diagramme permet l'enregistrement de plusieurs données d'utilisation, telles que la vitesse du véhicule, le temps d'utilisation, la distance parcourue, et éventuellement la consommation ou le régime moteur. Chaque donnée d'utilisation est transcrite par un organe scripteur porté par un chariot coulissant sur deux rails parallèles, ledit organe scripteur étant en général mobile axialement sur une certaine amplitude et rappelé par un ressort en direction du support d'enregistrement.

Le problème posé par ce type d'enregistreur est de pouvoir déceler une anomalie de la position de l'un ou des organes scripteurs, de façon à alerter l'utilisateur et à éviter toute détérioration du matériel. Une telle anomalie concerne naturellement l'absence du disque porte-diagramme à la suite d'un oubli, mais peut résulter aussi d'incidents divers tels qu'un disque détérioré ou un organe scripteur tordu ou coincé, à la suite d'une fausse manoeuvre, ou encore une fermeture incomplète du capot.

Compte tenu de la sécurité de fonctionnement exigée, il est donc important de disposer de tels moyens de contrôle, de sorte qu'il est en général prévu d'une part des moyens de contact fixes, et d'autre part des moyens de contact mobiles montés sur l'organe scripteur, lesdits moyens de contact permettant un contrôle de la position de l'organe scripteur et transmettant un signal lorsque la position axiale dudit organe scripteur est impropre à l'enregistrement.

Parmi les dispositifs existants, on peut citer celui décrit dans le certificat d'utilité français N° 2 249 393. Il est prévu un contact butant sous forme d'une plaque fixe montée dans le boîtier de l'enregistreur de route, et une plaquette opposée travaillant en flexion pour créer le contact d'alerte sous la pression d'un bras de commutation porté par chaque organe scripteur. En l'absence de disque porte-diagramme, la point de chacun des organes scripteurs s'engage dans une rainure radiale ménagée à cet effet dans le couvercle articulé supportant le disque porte-diagramme. En variante, la plaquette mobile peut être subdivisée en languettes, dont chacune concerne un organe scripteur, pour la plage d'oscillation de celui-ci. Une telle structure suppose un montage précis et délicat des divers composants, car les moyens de contact fixes sont indépendants des moyens de support des chariots, et de plus, la seule anomalie détectable est l'absence de disque porte-diagramme, car le bras de commutation n'agit que dans une seule direction axiale.

On peut également citer le brevet français N° 2 238 197 illustrant un ensemble de deux pistes conductrices disposées directement sur le support du disque porte-diagramme, et coopérant avec deux frotteurs pour détecter la présence ou l'absence de disque (voir en particulier la figure 3 de ce brevet).

Là encore, ce dispositif de détection n'agit que dans une seule direction axiale ; citons pour mémoire, dans le même ordre d'idées, le brevet français N° 2 307 253 et la demande de brevet allemand N° 2 435 189.

Afin de pallier ce dernier inconvénient, il a été proposé un dispositif de contrôle pouvant agir dans deux directions axiales. Citons le brevet français N° 2 305 808 décrivant des systèmes de lames parallèles élastiques, montées sur un support, et entre lesquelles passe un doigt porté par l'organe scripteur associé. Lorsque la position des organes scripteurs convient pour l'enregistrement, chacun des doigts passe entre les plaquettes qui ferment le contact ; en cas d'anomalie pour l'un des organes scripteurs, le doigt est déplacé axialement, et ouvre ainsi le contact correspondant. Un tel dispositif présente l'inconvénient de nécessiter un réglage précis des organes de contact fixes par rapport aux chariots, de façon à éviter la transmission de signaux parasites : il est ainsi prévu un support de lames élastiques réglable dans une direction perpendiculaire au plan des rails sur lesquels coulissent les chariots : ce réglage périodique, requérant un démontage en usine, est défavorable pour le coût d'utilisation. De plus, le support est encombrant, et implique, avec les paires de lames de contact, un grand nombre de pièces, ce qui a pour conséquence un coût de fabrication relativement élevé.

L'invention a pour objet de proposer un dispositif de contrôle de position plus performant que les dispositifs précités, en particulier évitant la nécessité d'un réglage à la fabrication des moyens de contact, grâce à un meilleur positionnement de ceux-ci par rapport aux chariots coulissants.

Un autre object de l'invention est de proposer un dispositif de structure simple, permettant la détection de multiples anomalies dans la position des organes scripteurs.

Un autre objet de l'invention est de proposer un dispositif permettant également un contrôle du déplacement extrême du chariot associé à l'enregistrement le plus éloigné du centre du disque porte-diagramme, ce déplacement pouvant provoquer une détérioration dudit disque.

Il s'agit plus particulièrement d'un dispositif de contrôle de position pour organe scripteur d'enregistreur, ledit enregistreur comportant au moins un chariot coulissant longitudinalement sur deux rails parallèles portant un organe scripteur, ledit organe scripteur étant mobile axialement sur une certaine amplitude et rappelé par un ressort en direction du support d'enregistrement, comportant d'une part des moyens de contact fixes, et d'autre part des moyens de contact mobiles montés sur l'organe scripteur, lesdits moyens de contact permettant un contrôle de la position de l'organe scripteur et transmettant un signal lorsque la position axiale est impropre à l'enregistrement, ou les moyens de contact fixes comprennent essentiellement deux pistes s'étendant parallèlement aux rails de guidage et à distance du plan du support d'enregistrement, et ou les moyens de contact mobiles comprennent un organe de contact pouvant se déplacer longitudinalement entre les deux pistes et présentant des portions de contact s'étendant transversalement en regard des faces de contact de chacune desdites pistes, de sorte qu'un signal est transmis dès que la position axiale de l'organe scripteur, tant en direction du support d'enregistrement que dans la direction opposée, est impropre à l'enregistrement.

De préférence, pour un enregistreur tel que tachygraphe, comportant plusieurs chariots coulissants portant chacun un organe scripteur associé, les moyens de contact fixes sont communs pour le contrôle de la position de chacun des organes scripteurs, les moyens de contact mobiles étant propres à chaque chariot coulissant, de sorte qu'un signal est transmis dès que la position axiale de l'un des organes scripteurs est impropre à l'enregistrement.

Avantageusement, le dispositif de l'invention comporte un support de pistes monté sur deux rails parallèles, ledit support présentant un évidement axial pour le passage du ou des organes de contact, la fixation du support de pistes étant de préférence réalisée par un élément de pontage enjambant les deux rails et sur lequel est monté directement ledit support de pistes.

Le support de pistes et/ou l'élément de pontage présentent avantageusement l'une au moins des caractéristiques suivantes :
- l'élément de pontage présente des faces inclinées parallèles aux rails de coulissement et en contact avec l'un desdits rails en vue d'un centrage longitudinal,
- le support de pistes et l'élément de pontage sont connectés entre eux par une liaison coulissante,
- l'élément de pontage présente une gorge axiale avec au moins une paire de pattes élastiques constituant une liaison du type queue d'aronde avec le support de pistes,
- l'élément de pontage et le support de pistes présentent des rainures et gorges rectilignes mutuellement associées en vue d'un centrage longitudinal relatif,
- des moyens sont prévus au voisinage d'une extrémité des pistes pour une liaison par encliquetage entre l'élément de pontage et le support de pistes,
- le support de pistes présente au voisinage de l'autre extrémité des pistes au moins une patte élastique de butée, pour le maintien de l'ensemble par rapport aux support des rails associés.

Selon une autre caractéristique avantageuse de l'invention, il est prévu de pouvoir contrôler le déplacement extrême du chariot associé à l'enregistrement le plus éloigné du centre du disque porte-diagramme : pour cela, le support de pistes porte, au voisinage d'une extrémité des pistes, un contact de fin de course coopérant avec le chariot adjacent ; en particulier, le support de pistes présente une languette élastique, et porte deux lames de contact montées de part et d'autre de la languette élastique, ladite languette coopérant par son extrémité libre avec le chariot adjacent pour le contact de fin de course.

Selon une première variante, les pistes sont essentiellement planes, et l'organe de contact associé à l'organe scripteur a la forme générale d'un H dont chacune des branches reste de part et d'autre du plan desdites pistes.

Selon une autre variante, les pistes présentent chacune une section transversale en forme de C, et l'organe de contact associé à l'organe scripteur a la forme d'une barrette dont les extrémités passent dans l'ouverture du profil desdites pistes.

Pour un montage simple et fiable des moyens de contact mobiles, l'organe de contact est fixé latéralement sur un support de contact traversé par l'organe scripteur et monté coulissant sur l'organe scripteur, et un ressort est prévu sur ledit organe scripteur tendant au maintien dudit support de contact dans une position de butée.

Afin d'éviter tout défaut de centrage, le support de contact ou le chariot présente un doigt s'engageant dans une fente associée de l'autre élément pour éviter une rotation relative dudit support de contact par rapport audit chariot dans toutes les positions axiales dudit organe scripteur.

D'autres caractéristiques et avantages de l'invention apparaîtront plus clairement à la lumière de la description qui va suivre et du dessin annexé, concernant un mode de réalisation préférentiel d'un dispositif de contrôle conforme à l'invention, en référence aux figures, où :
- la figure 1 est une vue éclatée en perspective illustrant un dispositif de contrôle conforme à l'invention, équipant un enregistreur de route à trois chariots coulissants portant chacun un organe scripteur,
- la figure 2 est une vue de dessus de l'ensemble de la figure 1 en position montée,
- la figure 3 est une coupe selon III-III de la figure 2,
- les figures 4a à 4c sont des coupes schématiques selon IV-IV de la figure 2, la figure 4a illustrant une position d'enregistrement normale, tandis que les figures 4b et 4c illustrent des anomalies détectées par le dispositif de contrôle de l'invention,
- les figures 5a et 5b sont des coupes partielles de la vue de la figure 3, illustrant le fonctionnement d'un contact de fin de course contrôlant le déplacement extrême du dernier chariot,
- la figure 6 est une vue partielle en perspective illustrant une variante du dispositif de contrôle, dans laquelle les pistes de contact présentent une section transversale en forme de C.

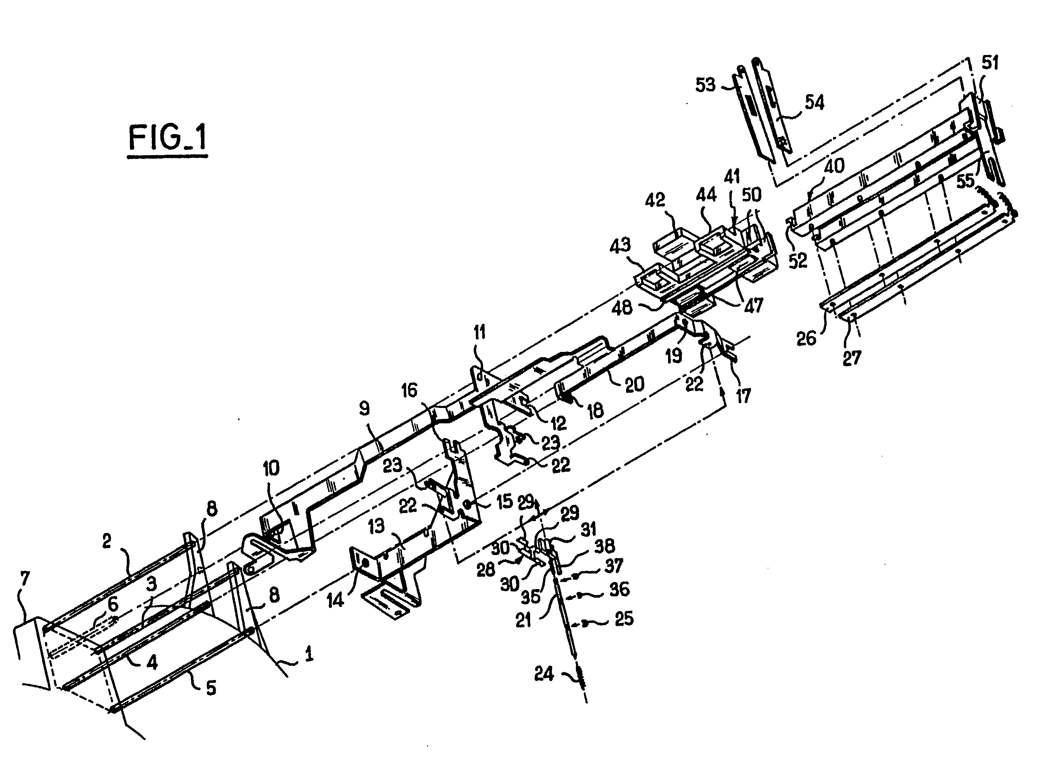

Le dispositif de contrôle représenté aux figures 1 à 3 équipe un enregistreur de route à trois chariots coulissants portant chacun un organe scripteur, mais il faut bien comprendre que l'invention n'est pas limitée à une telle application, et que le dispositif de contrôle de position qui va être maintenant décrit pourrait naturellement équiper d'autres types d'enregistreurs.

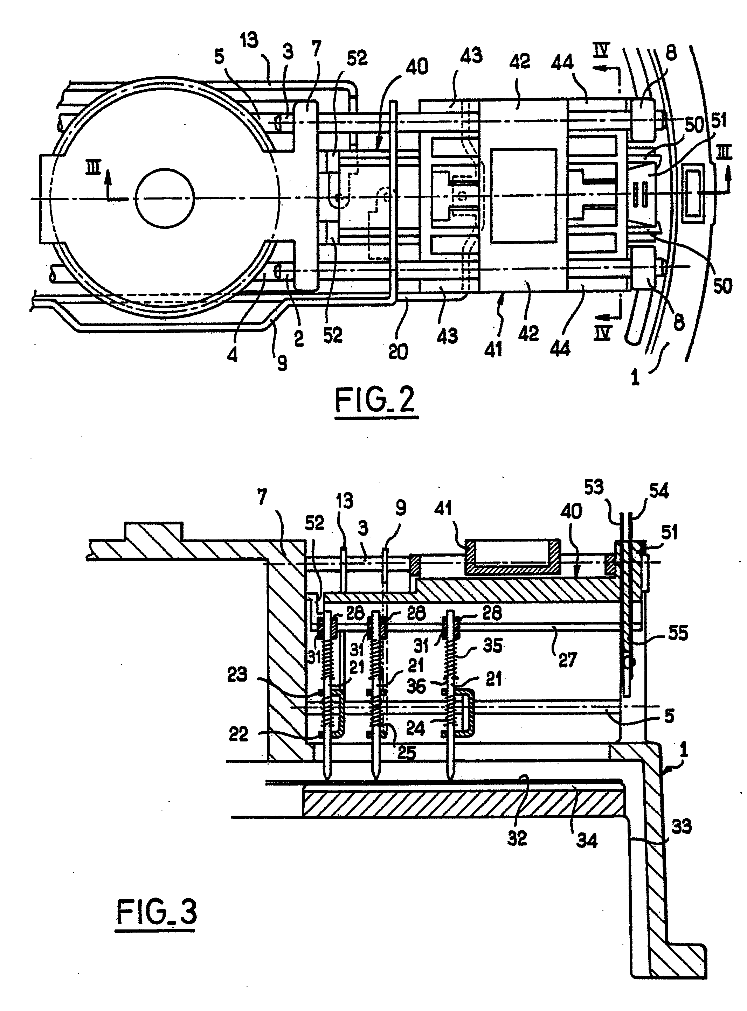

Le boîtier 1 supporte un système de rails parallèles 2, 3, 4, 5 et 6, fixés au moyen d'une embase centrale 7 et/ou de pattes 8. Sur la vue éclatée de la figure 1, dans laquelle le boîtier 1 doit être imaginé transparent par mesure de clarté, le système des rails 2, 3, 4, 5 est bien visible, tandis que le rail 6 est illustré en pointillés afin de matérialiser sa trace par rapport aux quatre autres rails, ledit rail 6 étant en réalité disposé en arrière de l'embase centrale 7, et concernant l'extrémité d'un des chariots, ainsi que cela sera précisé plus loin. Il faut bien comprendre que tous les organes représentés en vue éclatée sont représentés à une échelle agrandie par rapport au système de rails de support, étant entendu que l'ensemble est monté entre l'embase centrale 7 et les pattes 8, ainsi que cela est visible sur les figures 2 et 3.

De façon connue en soi dans le domaine des tachygraphes, il est prévu un ensemble de trois chariots coulissants portant chacun un organe scripteur, pour l'enregistrement de données d'utilisation, telles que la vitesse du véhicule, le temps d'utilisation, la distance parcourue. Un premier chariot 9, concernant par exemple l'enregistrement du temps d'utilisation, et de ce fait dénommé couramment chariot temps-chauffeur, présente un triple guidage : d'abord en arrière de l'embase centrale 7, le rail 6 s'engage dans le trou associé 10, ensuite, en avant de ladite embase, les rails 2, 3 s'engagent respectivement dans un trou 11 et une fourchette 12 associés. Un deuxième chariot 13, correspondant par exemple à l'enregistrement de la distance parcourue, et de ce fait couramment dénommé chariot odomètre, est guidé en translation par les rails 3 et 5 : le rail 5 s'engage dans les trous associés 14, 15, tandis que le rail 3 s'engage dans la fourchette correspondante 16. Le troisième chariot 20, concernant l'enregistrement de la vitesse du véhicule, et de ce fait couramment dénommé chariot vitesse, est quant à lui guidé en translation par les rails 4 et 5 : le rail 4 s'engage dans les trous associés 18 et 19, tandis que le rail 5 s'engage dans la fourchette correspondante 17.

De façon connue en soi, chaque chariot porte un organe scripteur, mobile axialement sur une certain amplitude, ledit organe scripteur étant rappelé par un ressort en direction du support d'enregistrement (voir figure 3 ). Etant donné la similitude des moyens d'inscription, des références identiques seront données pour les moyens inscripteurs des trois chariots. Chaque organe scripteur 21 est monté coulissant sur des pattes 22 et 23 du chariot associé, et est soumis à l'action d'un ressort 24 disposé entre la patte 23 et un segment d'arrêt 25, rappelant en permanence ledit organe scripteur en direction du support d'enregistrement, ainsi que cela est bien connu.

Conformément à un aspect essentiel de l'invention, il est prévu un dispositif de contrôle comportant des moyens de contact permettant un contrôle de la position de chaque organe scripteur, et transmettant un signal lorsque la position axiale est impropre à l'enregistrement. Il est ainsi prévu des moyens de contact fixes comprenant essentiellement deux pistes 26, 27, en matériau bon conducteur de l'électricité, s'étendant parallèlement aux rails de guidage et à distance du plan du support d'enregistrement, ainsi que des moyens de contact mobiles comprenant un organe de contact 28 pouvant se déplacer longitudinalement entre les deux pistes, et présentant des portions de contact s'étendant transversalement en regard des faces de contact de chacune desdites pistes. Dans la variante illustrée aux figures 1 à 3, les pistes 26, 27 sont essentiellement planes, et l'organe de contact associé 28 a la forme générale d'un H dont chacune des branches supérieures 29 et inférieures 30 reste d'un côté ou de l'autre du plan desdites pistes. L'organe de contact 28 est fixé latéralement sur un support de contact 31 en matière isolante, traversé par l'organe scripteur. Ainsi, quel que soit le déplacement de l'un des chariots, les branches 29 et 30 de l'organe de contact associé restent de part et d'autre de chacune des pistes 26, 27.

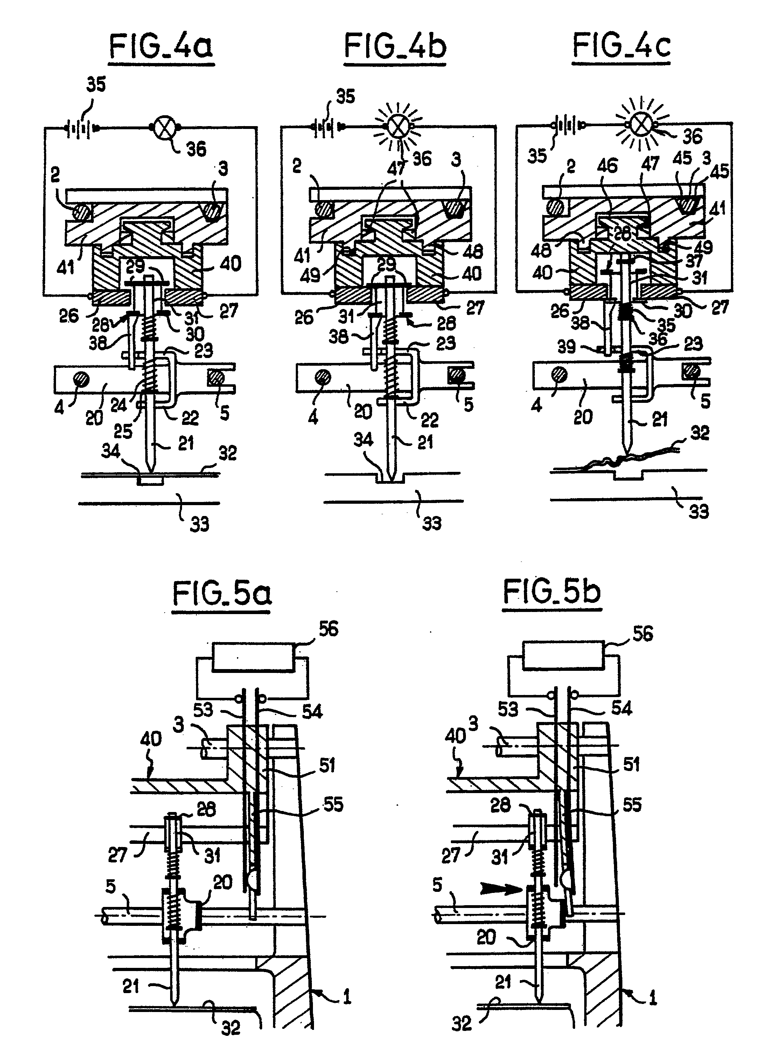

La position de la figure 3 correspond à une situation normale d'enregistrement, chacun des organes scripteurs 21 étant appliqué contre le disque porte-diagramme 32 prenant appui sur une face du capot 33 qui est articulé sur le boîtier 1, les pointes desdits organes scripteurs restant alignées au-dessus d'une rainure radiale 34 ménagée dans la face d'appui. Ceci est illustré sur la vue schématique de la figure 4a, représentant l'organe scripteur du chariot vitesse 20. Si l'utilisateur a omis d'introduire un disque porte-diagramme dans l'enregistreur, et a refermé le capot articulé sur le boîtier, le ressort 24 pousse les organes scripteurs 21 dans la rainure 34, et les branches supérieures 29 des organes de contact 28 associé établissent immédiatement un contact électrique entre les pistes 26 et 27, ainsi qu'illustré à la figure 4b. Une situation analogue se produirait en cas de fermeture incomplète du capot articulé. Un circuit d'alarme est schématisé sur ces figures, et comprend par exemple une pile 35 et une diode LED ou une lampe 36, étant entendu que tout autre système lumineux ou sonore pourra être choisi en fonction des besoins de l'application.

Le dispositif de contrôle fonctionne également dans l'autre direction axiale de l'organe scripteur 21, de façon à détecter des incidents divers. Ainsi, en figure 4c, le disque 32 est détérioré, ce que provoque un soulèvement de l'organe scripteur qui amène les branches inférieures 30 au contact des pistes 26 et 27, et déclenche ainsi le dispositif d'alarme. Il est à noter que cette dernière situation pourrait également se produire lorsque l'organe scripteur est coincé ou a été tordu lors d'une fausse manoeuvre à la fermeture du capot. Compte tenu de la relative fragilité des branches de l'organe de contact 28, il est important d'éviter que ces branches soient soumises à des efforts excessifs : à l'abaissement de l'organe scripteur, la rainure 34 joue le rôle de butée axiale, mais au soulèvement dudit organe scripteur, il faut prévoir une autre sécurité. C'est ainsi que le support de contact 31 est monté coulissant sur l'organe scripteur 21, et qu'un ressort 35, disposé entre ledit support de contact et un segment d'arrêt 36, tend à maintenir ce support de contact contre un segment d'arrêt 37 ; en cas de soulèvement excessif de l'organe scripteur, ledit organe continue à traverser son support en comprimant le ressort 35, dont la raideur est choisie pour éviter toute détérioration des branches inférieures 30 de l'organe de contact (position de la figure 4c). On notera la présence d'un doigt 38 porté par le support de contact 31, dont l'extrémité s'engage dans une fente associée 39 de la patte 23 du chariot, ce qui évite une rotation relative dudit support de contact par rapport audit chariot, et ce dans toutes les positions axiales de l'organe scripteur ; ceci permet de s'assurer du bon positionnement relatif entre l'organe de contact et les pistes 26, 27, grâce à une orientation relative constante.

Il va de soi que l'alignement des pistes de contact 26, 27 par rapport aux rails de guidage doit rester aussi précis et aussi constant que possible dans le temps. Il est ainsi prévu un support de pistes 40 présentant un évidement axial pour le passage des organes de contact, de part et d'autre duquel sont fixées, par exemple par rivetage (écrasement de picots saillants par ultrasons), les pistes conductrices 26 et 27. Le support de pistes 40 est de préférence monté sur deux rails parallèles 2, 3 par l'intermédiaire d'un élément de pontage 41 enjambant lesdits rails, et sur lequel est monté directement ledit support de pistes. L'élément de pontage comporte, de chaque côté, des pattes 42, 43, 44 entre lesquelles passent les rails 2, 3, des faces inclinées 45 étant prévues sur des pattes 43, 44, du côté du rail 3 par exemple, de façon à obtenir un centrage longitudinal parfait par rapport aux rails de coulissement. Le support de pistes 40 et l'élément de pontage 41 sont de préférence connectés entre eux par une liaison coulissante. L'élément de pontage 41 présente à cet effet une gorge axiale 46, avec un système de paires de pattes élastiques 47 constituant une liaison du type queue d'aronde avec le support de pistes. De plus, l'élément de pontage et le support de pistes présentent des rainures et gorges rectilignes mutuellement associées 48 et 49 respectivement, en vue d'un centrage longitudinal relatif. Les pattes élastiques 47 maintiennent parfaitement le support de pistes contre l'élément de pontage, de sorte que l'alignement des pistes 26, 27 par rapport aux rails de guidage reste constant, et ce sans nécessiter un réglage particulier, ce qui représente un avantage notable par rapport aux dispositifs de contrôle existants.

Pour le positionnement longitudinal des moyens de support des pistes, il est prévu d'une part des moyens de verrouillage de l'élément de pontage 41 sur le support de pistes 40, et d'autre part des moyens de butée d'ensemble contre l'embase centrale 7 et les pattes 8 du boîtier. Il est ainsi prévu des pattes d'encliquetage 50 sur l'élément de pontage 41, coopérant avec les faces obliques d'un butoir 51 : ceci positionne parfaitement l'élément de pontage par rapport au support de pistes. De l'autre côté, le support de pistes 40 présente des pattes de butée élastiques 52 coopérant avec la face en regard de l'embase centrale 7 : l'ensemble est ainsi parfaitement positionné entre l'embase centrale et les pattes 8 du boîtier.

Conformément à un autre aspect de l'invention, le dispositif proposé permet également un contrôle du déplacement extrême du chariot associé à l'enregistrement le plus éloigné du centre du disque porte-diagramme (ici le chariot vitesse 20), le retour du chariot risquant de provoquer une détérioration dudit disque. A cet effet, le support de pistes porte au voisinage d'une extrémité des pistes un contact de fin de course coopérant avec le chariot adjacent. Les coupes partielles à échelle agrandie des figures 5a et 5b illustrent la structure de ce contact de fin de course. Le butoir 51 reçoit à cet effet deux lames élastiques 53, 54 dans une fente correspondante (fixées par encliquetage), et présente une languette 55 passant entre les lames conductrices, ladite languette coopérant par son extrémité libre avec le chariot adjacent pour le contact de fin de course. La figure 5a correspond à une situation normale d'enregistrement de la vitesse, et le contact entre les lames conductrices 53, 54 reste établi. Lorsque l'on arrive à une vitesse atteignant un seuil prédéterminé, le chariot-vitesse pousse la languette 55, et interrompt de ce fait le contact entre les lames conductrices, ainsi qu'illustré à la figure 5b. Un dispositif 56 prévu à cet effet, entre alors en action, et enclenche une alarme visuelle ou sonore et arrête le déplacement du chariot. Ceci est particulièrement avantageux car, en raison de la grande démultiplication des moyens de transmission des chariots, le risque serait grand de casser, plier, ou déchirer le disque porte-diagramme lors du retour de chariot si le seuil prédéterminé de vitesse venait à être dépassé. La possibilité d'arrêter la progression ultérieure du chariot-vitesse lorsque le seuil prédéterminé de vitesse est atteint, permettant un retour du chariot sans risque de détériorer le disque porte-diagramme, constitue un autre avantage important par rapport aux dispositifs de contrôle existants. Il est à noter que le positionnement longitudinal précis des moyens de support des pistes, donc du contact de fin de course, permet d'utiliser ce dispositif de contrôle longitudinal avec une grande précision relativement à la vitesse du véhicule.

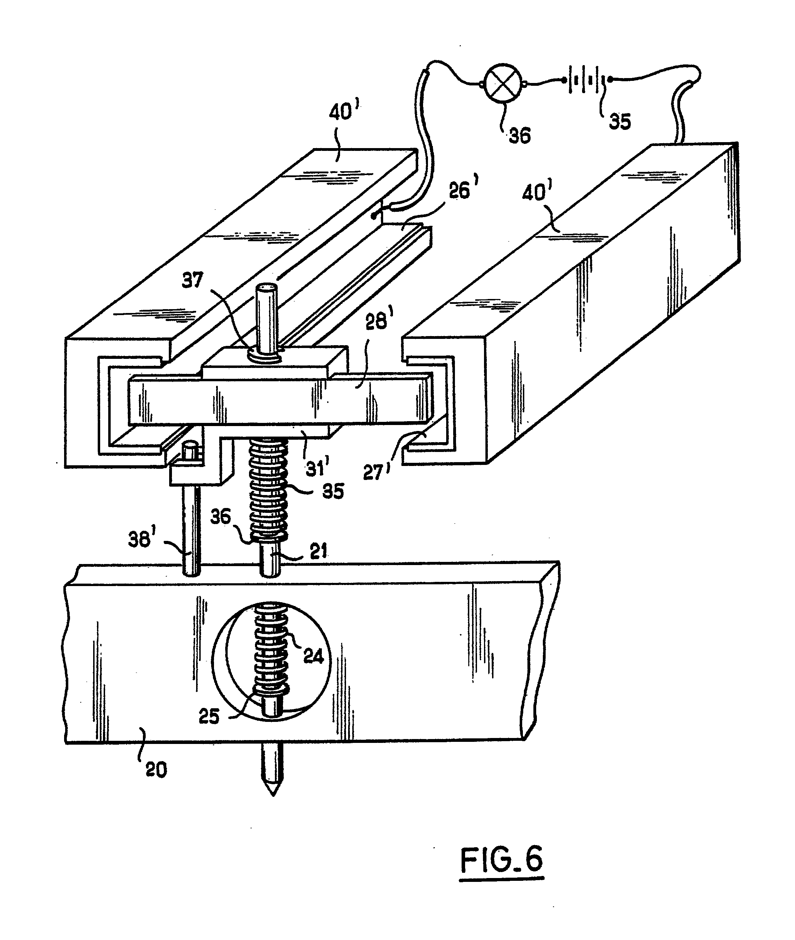

La figure 6 illustre une variante du dispositif de contrôle de l'invention, dans laquelle le système pistes-organe de contact présente une structure légèrement différente. Ici en effet, les pistes 26' et 27' présentent une section transversale en forme de C, et l'organe de contact 28' associé à un organe scripteur a la forme d'une barrette dont les extrémités passent dans l'ouverture du profil desdites pistes. Le montage du support de contact 31' sur l'organe scripteur 21 est analogue à celui de la variante précédente, et le doigt anti-rotation 38' est ici porté par le chariot mobile. Les éléments support de pistes 40' sont de préférence montés sur deux rails parallèles comme dans le cas de la variante précédente. Le dispositif de contrôle fonctionne également selon les deux directions de déplacement axial de l'organe scripteur 21, de sorte que les figures schématiques 4a, 4b et 4c de la variante précédente s'appliquent également au fonctionnement de cette variante.

Le dispositif de contrôle de position de l'invention est ainsi particulièrement performant, et permet la détection des multiples anomalies dans la position des organes scripteurs. Sa structure reste particulièrement simple (le support de pistes et l'élément de pontage formant des éléments monoblocs moulés), et la nécessité d'un réglage périodique des moyens de contact est évitée grâce à un parfait positionnement des moyens de contact par rapport aux chariots coulissants.

L'invention n'est pas limitée au mode de réalisation qui vient d'être décrit, mais englobe toute variante qui reprendrait, avec des moyens équivalents, les caractéristiques essentielles figurant aux revendications.

**Revendications**

1. Dispositif de contrôle de position pour organe scripteur d'enregistreur, ledit enregistreur comportant au moins un chariot coulissant longitudinalement sur deux rails parallèles et portant un organe scripteur, ledit organe scripteur étant mobile axialement sur une certaine amplitude et rappelé par un ressort en direction du support d'enregistrement, comportant d'une part des moyens de contact fixes, et d'autre part des moyens de contact mobiles montés sur l'organe scripteur, lesdits moyens de contact permettant un contrôle de la position de l'organe scripteur et transmettant un signal lorsque la position axiale est impropre à l'enregistrement, ou les moyens de contact fixes comprennent essentiellement deux pistes (26,27,26',27') s'étendant parallèlement aux rails de guidage et à distance du plan du support d'enregistrement, et ou les moyens de contact mobiles comprennent un organe de contact (28,28') pouvant se déplacer longitudinalement entre les deux pistes et présentant des portions de contact s'étendant transversalement en regard des faces de contact de chacune desdites pistes, de sorte qu'un signal est transmis dès que la position axiale de l'organe scripteur (21), tant en direction du support d'enregistrement que dans la direction opposée, est impropre à l'enregistrement.

2. Dispositif de contrôle selon la revendication 1, pour enregistreur comportant plusieurs chariots coulissants portant chacun un organe scripteur associé, caractérisé par le fait que les organes de contact fixes (26,27, 26',27') sont communs pour le contrôle de la position de chacun des organes scripteurs (21), les moyens de contact mobiles (28,28') étant propres à chaque chariot coulissant, de sorte qu'un signal est transmis dès que la position axiale de l'un des organes scripteurs (21) est impropre à l'enregistrement.

3. Dispositif de contrôle selon l'une des revendications 1 et 2, caractérisé par le fait qu'il comporte un support de pistes (40, 40') monté sur deux rails parallèles, ledit support présentant un évidement axial pour le passage du ou des organes de contact (28, 28').

4. Dispositif de contrôle selon la revendication 3, caractérisé par le fait que la fixation du support de pistes (40) est réalisée par un élément de pontage (41) enjambant les deux rails (2, 3) et sur lequel est monté directement ledit support de pistes.

5. Dispositif de contrôle selon la revendication 4, caractérisé par le fait que l'élément de pontage (41) présente des faces inclinées (45) parallèles aux rails de coulissement et en contact avec l'un (3) desdit rails, en vue d'un centrage longitudinal.

6. Dispositif de contrôle selon l'une des revendications 4 et 5, caractérisé par le fait que le support de pistes (40) et l'élément de pontage (41) sont connectés entre eux par une liaison coulissante.

7. Dispositif de contrôle de la revendication 6, caractérisé par le fait que l'élément de pontage (41) présente une gorge axiale (46) avec au moins une paire de pattes élastiques (47) constituant une liaison du type queue d'aronde avec le support de pistes (40).

8. Dispositif de contrôle selon l'une des revendications 6 et 7, caractérisé par le fait que l'élément de pontage (41) et le support de pistes (40) présentent des rainures et gorges rectilignes mutuellement associées (48, 49) en vue d'un centrage longitudinal relatif.

9. Dispositif de contrôle selon l'une des revendications 4 à 8, caractérisé par le fait que des moyens (50, 51) sont prévus au voisinage d'une extrémité des pistes pour une liaison par encliquetage entre l'élément de pontage (41) et le support de pistes (40).

10. Dispositif de contrôle selon la revendication 9, caractérisé par le fait que le support de pistes (40) présente au voisinage de l'autre extrémité des pistes au moins une patte élastique de butée (52), pour le maintien de l'ensemble par rapport aux supports (7, 8) des rails associés.

11. Dispositif de contrôle selon l'une des revendications 3 à 10, caractérisé par le fait que le support de pistes (40) porte au voisinage d'une extrémité des pistes un contact de fin de course (53, 54) coopérant avec le chariot adjacent (20).

12. Dispositif de contrôle selon la revendication 11, caractérisé par le fait que le support de pistes présente une languette élastique (55), et porte deux lames de contact (53, 54) montées de part et d'autre de la languette élastique, ladite languette (55) coopérant par son extrémité libre avec le chariot adjacent (20) pour le contact de fin de course.

13. Dispositif de contrôle selon l'une des revendications 1 à 12, caractérisé par le fait que les pistes (26, 27) sont essentiellement planes, et l'organe de contact (28) associé à l'organe scripteur (21) a la forme générale d'un H dont chacune des branches (29, 30) reste d'un côté ou de l'autre du plan desdites pistes.

14. Dispositif de contrôle selon l'une des revendications 1 à 12, caractérisé par le fait que les pistes (26', 27') présentent chacune une section transversale en forme de C, et l'organe de contact (28') associé à l'organe scripteur (21) a la forme d'une barrette dont les extrémités passent dans l'ouverture du profil desdites pistes.

15. Dispositif de contrôle selon l'une des revendications 13 et 14, caractérisé par le fait que l'organe de contact (28, 28') est fixé latéralement sur un support de contact (31, 31') traversé par l'organe scripteur (21).

16. Dispositif de contrôle selon la revendication 15, caractérisé par le fait que le support de contact (31, 31') est monté coulissant sur l'organe scripteur (21), et qu'un ressort (35) est prévu sur ledit organe scripteur tendant au maintien dudit support de contact dans une position de butée.

17. Dispositif de contrôle selon l'une des revendications 15 et 16, caractérisé par le fait que le support de contact ou le chariot présente un doigt (38, 38') s'engageant dans une fente associée de l'autre élément pour éviter une rotation relative dudit support de contact (31, 31') par rapport audit chariot (20) dans toutes les positions axiales de l'organe scripteur (21).

**Patentansprüche**

1. Positionskontrollanordnung für das Schreibelement eines Registriergerätes, das mindestens einen, längs zwei parallel zueinander angeordneten Schienen gleitenden Wagen aufweist, der ein Schreibelement trägt, das um eine bestimmte Amplitude axial beweglich ist und durch eine Feder in Richtung auf den Registriersupport zurückgestellt wird, wobei am Schreibelement einerseits feste Kontaktmittel und andererseits bewegliche Kontaktmittel vorgesehen sind, die eine Lageüberwachung des Schreibelementes erlauben und ein Signal übertragen, sobald die axiale Lage nicht zur Registrierung geeignet ist, wobei die Festkontakte im wesentlichen aus zwei Bahnen (26, 27, 26', 27') bestehen, die sich parallel zu den Führungsschienen und im Abstand von der Ebene des Registriersupports erstrecken und die beweglichen Kontaktmittel mit einem Kontaktorgan (28, 28') versehen sind, das sich zwischen den beiden Bahnen längsverschieben kann und Kontaktteile aufweist, die sich quer zu Kontaktflächen jeder der erwähnten Bahnen erstrecken, so daß ein Signal übertragen wird, sobald die axiale Lage des Schreibelementes (21) sowohl in der Richtung zum Registriersupport als auch in der entgegengesetzten Richtung ungeeignet für eine Registrierung ist.

2. Kontrollanordnung nach Anspruch 1 für ein Registriergerät mit mehreren Gleitwagen, von denen jeder ein zugeordnetes Schreibelement trägt, dadurch gekennzeichnet, daß die festen Kontaktmittel (26, 27, 26', 27') zur Lagekontrolle für alle Schreibelemente (21) gemeinsam ausgebildet sind, und daß die beweglichen Kontaktmittel (28, 28') jeweils jedem Gleitwagen zugeordnet sind, so daß ein Signal übertragen wird, sobald die Axiallage eines der Schreibelemente (21) für die Registrierung ungeeignet ist.

3. Kontrollanordnung nach einem der Ansprüche 1 und 2, dadurch gekennzeichnet, daß ein Träger (40, 40') für die Bahnen an den beiden parallelen Schienen befestigt ist, der eine axiale Ausnehmung zum Durchführen des oder der Kontaktelemente (28, 28') aufweist.

4. Kontrollanordnung nach Anspruch 3, dadurch gekennzeichnet, daß die Befestigung für den Träger (40) der Bahnen durch ein Brückenelement (41) gebildet ist, das die beiden Schienen (2, 3) überspannt und auf dem der Träger für die Bahnen unmittelbar montiert ist.

5. Kontrollanordnung nach Anspruch 4, dadurch gekennzeichnet, daß das Brückenelement (41) schräge Flächen (45) aufweist, die parallel zu den Gleitschienen sind und mit einer (3) dieser Schienen zum Zweck einer Längszentrierung in Berührung stehen.

6. Kontrollanordnung nach einem der Ansprüche 4 und 5, dadurch gekennzeichnet, daß der Träger (40) für die Bahnen und das Brückenelement (41) unter sich durch eine Gleitverbindung zusammengehalten sind.

7. Kontrollanordnung nach Anspruch 6, dadurch gekennzeichnet, daß das Brückenelement (41) mit einer axial verlaufenden Hohlkehle (46) mit mindestens einem Paar elastischer Klammern (47) versehen ist, die mit dem Träger (40) für die Bahnen eine Art Schwalbenschwanzverbindung bilden.

8. Kontrollanordnung nach einem der Ansprüche 6 und 7, dadurch gekennzeichnet, daß das Brückenelement (41) und der Träger (40) für die Bahnen mit jeweils einander gegenseitig zugeordneten rechteckigen Rippen und Nuten zum Zweck einer gegenseitigen Längszentrierung (48, 49) versehen sind.

9. Kontrollanordnung nach einem der Ansprüche 4 bis 8, dadurch gekennzeichnet, daß benachbart zu einem Ende der Bahnen Mittel (50, 51) vorgesehen sind, um durch Verklipsung zwischen dem Brückenelement (41) und dem Träger (40) für die Bahnen eine Verbindung herzustellen.

10. Kontrollanordnung nach Anspruch 9, dadurch gekennzeichnet, daß dem Träger (40) für die Bahnen im Bereich des anderen Endes der Bahnen mindestens eine elastische Anschlaglasche (52) zugeordnet ist, um den Halt der Einheit an den Trägern (7, 8) der zugeordneten Schienen zu gewährleisten.

11. Kontrollanordnung nach einem der Ansprüche 3 bis 10, dadurch gekennzeichnet, daß der Träger (40) für die Bahnen im Bereich eines der Enden der Bahnen einen Endanschlag (53, 54) besitzt, der mit dem angrenzenden Wagen (20) zusammenwirkt.

12. Kontrollanordnung nach Anspruch 11, dadurch gekennzeichnet, daß der Träger für die Bahnen mit einer elastischen Zunge (55) versehen ist und zwei Kontaktfahnen (53, 54) trägt, die jeweils an der elastischen Zunge angebracht sind, und daß die Zunge (55) mit ihrem freien Ende mit dem benachbarten Wagen (20) als Endanschlag zusammenwirkt.

13. Kontrollanordnung nach einem der Ansprüche 1 bis 12, dadurch gekennzeichnet, daß die Bahnen (26, 27) im wesentlichen eben ausgebildet sind und daß das dem Schreibelement (21) zugeordnete Kontaktorgan (28) im wesentlichen die Form eines H hat, dessen Arme (29, 30) jeweils auf der einen oder der anderen Seite der Ebene der Bahnen anliegen.

14. Kontrollanordnung nach einem der Ansprühe 1 bis 12, dadurch gekennzeichnet, daß die Bahnen (26', 27') jeweils einen C-förmigen Querschnitt aufweisen und daß das Kontaktorgan (28'), das dem Schreibelement (21) zugeordnet ist, die Form eines Bügels aufweist, dessen Enden in die Öffnung des Profiles der Bahnen eingreifen.

15. Kontrollanordnung nach einem der Ansprüche 13 und 14, dadurch gekennzeichnet, daß das Kontaktorgan (28, 28') seitlich von einem Kontaktträger (31, 31') befestigt ist, das von dem Schreibelement (21) überquert wird.

16. Kontrollanordnung nach Anspruch 15, dadurch gekennzeichnet, daß der Kontaktträger (31, 31') gleitend auf dem Schreibelement (21) angeordnet ist und daß eine Feder (35) an dem Schreibelement vorgesehen ist, die den Kontaktträger in einer Anschlagsposition hält.

17. Kontrollanordnung nach einem der Ansprüche 15 und 16, dadurch gekennzeichnet, daß der Kontaktträger oder der Wagen mit einem Finger (38, 38') versehen sind, der in einen dem anderen Teil zugeordneten Schlitz eingreift, um eine Relativverdrehung des Kontaktträgers (31, 31') in bezug zum Wagen (20) in allen Axiallagen des Schreibelementes (21) zu verhindern.

## Claims

1. Appliance for monitoring the position of the recording element of a recording apparatus, the said apparatus comprising at least one carriage sliding longitudinally on two parallel rails and carrying a recording element, the said recording element being moveable axially over a pre-determined amplitude and urged by a spring towards the recording support, comprising on the one hand fixed contact means and on the other hand movable contact means mounted on the recording element, the said contact means allowing monitoring of the position of the recording element and transmitting a signal when the axial position is not suitable for recording, wherein the fixed contact means comprise essentially two tracks (26, 27, 26', 27') extending parallel to the guide rails and spaced away from the plane of the recording support, and wherein the moving contact means comprise a contact member (28, 28') capable of being displaced longitudinally between the two tracks and presenting contact portions extending transversely with respect to contact faces on each of the said tracks, the arrangement being such that a signal is transmitted whenever the axial position of the recording element (21), both towards the recording support and in the opposite direction, is unsuitable for recording.

2. Monitoring appliance according to claim 1, for recording apparatus comprising several sliding carriages each carrying an associated recording element, characterised by the fact that the fixed contact members (26, 27, 26', 27') serve in common for monitoring the position of each of the recording elements (21), the moving contact means (28, 28') being individual to each sliding carriage, the arrangement that a signal is transmitted whenever the axial position of one of the recording elements (21) is unsuitable for recording.

3. Monitoring appliance according to one of claims 1 and 2, characterised by the fact that it comprises a track support (40, 40') mounted on two parallel rails, the said support having an axial gap allowing movement of the or each contact member (28, 28').

4. Monitoring appliance according to claim 3, characterised by the fact that the attachment of the track support (40) is achieved by a bridging member (41) fitting between the two rails (2, 3) and on which is directly mounted the said track support.

5. Monitoring appliance according to claim 4, characterised by the fact that the bridging member (41) presents inclined faces (45) parallel to the sliding rails and in contact with one (3) of the said rails, to provide longitudinal location.

6. Monitoring appliance according to one of claims 4 and 5, characterised by the fact that the track support (40) and the bridging member (41) are connected together by a sliding engagement.

7. Monitoring appliance of claim 6, characterised by the fact that the bridging member (41) presents an axial groove (46) with at least one pair of resilient pads (47) constituting a dovetail type of interengagement with the track support (40).

8. Monitoring appliance according to one of claims 6 and 7, characterised by the fact that the bridging member (41) and the track support (40) present mutually associated rectilinear ribs and grooves (48, 49) to provide relative longitudinal location.

9. Monitoring appliance according to one of claims 4 to 8, characterised by the fact that means (50, 51) are provided in the neighbourhood of an end of the tracks for snap engagement between the bridging member (41) and the track support (40).

10. Monitoring appliance according to claim 9, characterised by the fact that the track support (40) presents in the neighbourhood of the other end of the track of at least one resilient abutment pad (52) for retaining the assembly with respect to the supports (7, 8) for the associated rails.

11. Monitoring appliance according to one of claims 3 to 10, characterised by the fact that the track support (40) carries in the neighbourhood of one end of the tracks an end-of-travel contact (53, 54) cooperating with the adjacent carriage (20).

12. Monitoring appliance according to claim 11, characterised by the fact that the track support presents a resilient tongue (55) and carries two contact strips (53, 54) mounted on one part and on the other of the resilient tongue, the said tongue (55) cooperating through its free end with the adjacent carriage (20) for the end-of-travel contact.

13. Monitoring appliance according to one of claims 1 to 12, characterised by the fact that the tracks (26, 27) are essentially flat and the contact member (28) associated with the recording element (21) has the general shape of an H, of which each of the limbs (29, 30) is disposed on one side or the other of the plane of the said tracks.

14. Monitoring appliance according to one of claims 1 to 12, characterised by the fact that the tracks (26', 27') each present a transverse section in the shape of a C, and the contact member (28') associated with the recording element (21) has the form of a bar of which the ends project into the opening of the profile of the said tracks.

15. Monitoring appliance according to one of claims 13 and 14, characterised by the fact that the contact member (28, 28') is located laterally on a contact support (31, 31') trough which the recording element (21) passes.

16. Monitoring appliance according to claim 15, characterised by the fact that the contact support (31, 31') is mounted to slide on the recording element (21) and that a spring (35) is provided on the said recording element, acting to maintain the said contact support in an abutting position.

17. Monitoring appliance according to any one of claims 15 and 16, characterised by the fact that the contact support or the carriage presents a finger (38, 38') engaging in an opening associated with the other element to prevent relative rotation of the said contact support (31, 31') with respect to the said carriage (20) in all axial positions of the recording element (21).

FIG.1

EP 0 206 862 B1

FIG. 2

FIG. 3

FIG_4a  FIG_4b  FIG_4c

FIG.5a  FIG.5b

FIG.6